# EUROPÄISCHE PATENTSCHRIFT

(11) **EP 2 274 809 B1**
(45) Veröffentlichungstag und Bekanntmachung des Hinweises auf die Patenterteilung: **02.08.2017**
(21) Anmeldenummer: 09742059.0
(22) Anmeldetag: 05.05.2009
(51) Int. Cl.: H02B 13/025

(54) **SCHALTANLAGE, INSBESONDERE MITTELSPANNUNGS-SCHALTANLAGE**
SWITCHGEAR, ESPECIALLY MEDIUM VOLTAGE SWITCHGEAR SYSTEM
DISPOSITIF DE COMMUTATION, EN PARTICULIER DISPOSITIF DE COMMUTATION MOYENNE TENSION

(30) Priorität: 09.05.2008 DE 102008023503
(43) Veröffentlichungstag der Anmeldung: 19.01.2011
(73) Patentinhaber: Siemens Aktiengesellschaft, 80333 München (DE)
(72) Erfinder: ALBERT, Clemens, 63773 Goldbach (DE); HOHMANN, Stefan, 36100 Petersberg (DE); JUNKER, Guido, 63486 Bruchkoebel (DE); TEICHMANN, Jörg, 63755 Alzenau (DE)
(86) Internationale Anmeldenummer: PCT/EP2009/055417
(87) Internationale Veröffentlichungsnummer: WO 2009/135841

(56) Entgegenhaltungen:
- US-A- 5 715 134
- US-A- 5 892 195
- US-A1- 2003 116 413

## Beschreibung

Die Erfindung betrifft eine Schaltanlage, insbesondere Mittelspannungs-Schaltanlage, mit einer Anzahl von Schaltgeräten, Kabelanschlüssen und/oder Sammelschienen, die in einem Schaltschrank angeordnet sind, wobei in dem Schaltschrank das oder die Schaltgeräte in einem metallgekapselten, gasisolierten Behälter oberhalb einer Anzahl von Sicherungskassetten mit Sicherungselementen angeordnet ist bzw. sind.

In der Energieverteilung werden besonders in der Mittelspannungsebene zur Erfüllung von Schalt- und Schutzaufgaben im elektrischen Verteilungsnetz kompakte gas- oder luftisolierte Schaltanlagen verwendet. Besonders im Bereich der Sekundärverteilung mit relativ geringen Nennströmen bis max. 1250 A sowie Kurzschlussströmen bis maximal 25 kA sind Schaltanlagen in einer so genannten Block- oder Modulbauform ausgebildet. Das heißt, dass mehrere Schaltgeräte mit unterschiedlichen Schaltfunktionen, wie z. B. Lastschalter, Leistungsschalter und Transformatorabzweige, in einem einzigen mit in der Regel einem Isoliergas, z. B. Schwefelhexalfluorid-Gas gefüllten Behälter angeordnet sind.

Dabei sind beispielsweise mittels einer aus dem Behälter herausgeführten Sammelschiene mehrere Schaltgeräte mehrerer Behälter zu einer aus mehreren Schaltfeldern mit unterschiedlichen Schaltfunktionen bestehenden größeren Schaltanlage verbunden. Auch sind beispielsweise mittels einer herausgeführten Sammelschiene Schaltfelder mit einer einzigen Schaltfunktion miteinander verbunden. So werden diese Schaltanlagen unterschieden in erweiterbare und nicht erweiterbare Anlagentypen.

Neben dem Behälter (auch Gasbehälter genannt) bestehen diese Schaltanlagen aus der beschriebenen Sammelschiene, aus einem Bereich des Kabelanschlusses sowie bei dem Einsatz von Hochspannungs-/Hochleistungssicherungen aus einem Sicherungsraum mit Sicherungskassetten, in welchen Sicherungselemente angeordnet sind.

Üblicherweise werden die beschriebenen Komponenten und Sektionen in einer besonderen Art und Weise so zueinander angeordnet, dass sich eine besonders wirtschaftliche Art der Herstellung und des Betriebes dieser Schaltanlagen ergibt.

Dazu ist es bekannt, den Sicherungsraum der beschriebenen Schaltanlage im Kabelanschlussraum des Transformatorabzweigfeldes zu platzieren und den Kabelanschluss direkt an den aus Gießharz bestehenden Sicherungsköcher zu schrauben.

Ein besonderes Konstruktionsmerkmal eines Schaltanlagentyps obiger Art ist darüber hinaus eine Sollbruchstelle, die in die Außenhaut des gasisolierten Behälters integriert ist. Diese Sollbruchstelle dient der Entlastung eines hohen Überdruckes, der innerhalb des Behälters im Falle eines Störlichtbogens im Inneren des Behälters auftreten kann. Ein Störlichtbogen ist mit einer starken Aufheizung des Gases auf mehrere 1000°C und dadurch einem starken Druckanstieg auf mehrere bar innerhalb einiger 10 Millisekunden verbunden.

Die Sollbruchstelle ist üblicherweise in Form einer Brechplatte oder Berstscheibe ausgeführt, deren Berstdruck oberhalb eines im Normalbetrieb auftretenden maximalen Gasdruckes im Behälter, aber unterhalb eines Berstdruckes des gesamten Behälters, eingestellt ist. Durch die Anordnung der Berstscheibe in eine vorgegebene Richtung ist die Druckentlastung der gesamten Schaltanlage bestimmt. In der Regel wird die Schaltanlage in Richtung Boden entlastet. Das heißt, die austretenden heißen Gase werden nach unten geleitet.

Bei einer Schaltanlage mit einem Sicherungsraum unterhalb des Behälters im Kabelanschlussraum entsteht insbesondere bei erweiterbaren Schaltfeldern das Problem, dass im Falle eines behälterinternen Störlichtbogens die heißen Gase in den Sicherungsraum austreten, so dass bei Abnahme einer Bedienungsklappe des Sicherungsraums die heißen Gase nach vorn entweichen und Bedienpersonal in besonders ungünstigen Fällen geschädigt werden kann.

Aus der Veröffentlichungsschrift US 2003/0116413 A1 ist ein Mittelspannungsschalter für einen Motor bekannt, bei dem in einem Gehäuse oberhalb von elektrischen Sicherungen ein Trennschalter angeordnet ist. Das Gehäuse weist an seiner Oberseite eine Auslassöffnung mit zwei Klappen auf, durch die bei Auftreten eines Lichtbogens heiße Luft und Flammen vertikal nach oben aus dem Gehäuse ausgelassen werden.

Aufgabe der Erfindung ist es, eine Schaltanlage, insbesondere Mittelspannungs-Schaltanlage, anzugeben, die derart eingerichtet ist, dass in einem Störfall ein sicherer Zugang zu dem Sicherungsraum ermöglicht ist.

Die Aufgabe wird erfindungsgemäß durch die im Anspruch 1 angegebenen Merkmale gelöst.

Vorteilhafte Weiterbildungen der Erfindung sind Gegenstand der Unteransprüche.

Erfindungsgemäß umfasst eine Schaltanlage, insbesondere eine Mittelspannungs-Schaltanlage, eine Anzahl von Schaltgeräten, Kabelanschlüssen und/oder Sammelschienen, die in einem Schaltschrank angeordnet sind, wobei in dem Schaltschrank das oder die Schaltgeräte in einem metallgekapselten, mit Isoliergas gefüllten Behälter oberhalb einer Anzahl von Sicherungskassetten mit Sicherungselementen angeordnet ist bzw. sind, wobei der Behälter mit mindestens einer Druckentlastungseinrichtung mit einer vorgegebenen Entlastungsrichtung versehen ist und den Sicherungskassetten zumindest an einer der Entlastungsrichtung zugewandten Seite zumindest ein Schottelement zugeordnet ist.

Durch das im Bereich der Sicherungskassette in Entlastungsrichtung der Druckentlastungseinrichtung angeordnete Schottelement ist ein Austreten von heißen Gasen nach vorne in einen Sicherungsraum verhindert, indem eine gezielte Ableitung der Gase in einen Ableitkanal gegeben ist. Hierdurch ist insbesondere auch bei einer Erweiterung der Schaltanlage sichergestellt, dass in einem Störfall beim Öffnen des Schaltschranks, insbesondere des Sicherungsraumes mit den Sicherungskassetten, weitgehend keine Gase nach vorne in Richtung eines Bedieners austreten. Somit ist eine hohe Bediensicherheit gegeben. Durch die Verwendung von einfachen Schottelementen ist ein kompakter und einfacher sowie kostengünstiger Aufbau gegeben.

Eine mögliche Ausführungsform der Erfindung sieht vor, dass bei einer Anordnung der Druckentlastungseinrichtung im Rückwandbereich des Behälters ein hinteres Schottelement denjenigen Enden, insbesondere den hinteren Enden, der Sicherungskassetten zugeordnet und diese zumindest teilweise oder vollständig abdeckend oder überdeckend angeordnet ist, die in Richtung des Rückwandbereichs des Behälters liegen. Dabei ist insbesondere eine Schottplatte am hinteren Bereich der Sicherungskassetten teilweise oder vollständig abdeckend eingezogen, so dass austretende Gase an den Sicherungskassetten vorbei nach unten abgeleitet werden. Somit ist ein Eintreten der Gase in den Sicherungsraum sicher vermieden, so dass bei einem Wechsel oder Austausch einer der Sicherungselemente keine Gase nach vorne in Richtung eines Bedieners austreten.

In einer weiteren, alternativen Ausführungsform ist bei einer Anordnung der Druckentlastungseinrichtung zumindest in einem Seitenwandbereich des Behälters ein seitliches Schottelement derjenigen Seite der Sicherungskassetten zugeordnet und zumindest teilweise oder vollständig abdeckend angeordnet, die der Entlastungsrichtung zugewandt ist. Durch das seitlich an der/den Sicherungskassette/n angeordnete Schottelement wird eine seitliche Ableitung der austretenden Gase nach unten ermöglicht und somit ein Eintreten der austretenden Gase in den Sicherungsraum verhindert.

Bei einer alternativen Anordnung der Druckentlastungseinrichtung zumindest in einem Bodenbereich des Behälters ist ein vorderes Schottelement vorzugsweise einem Frontwandbereich des Behälters und/oder Schrankfrontbereich und der Sicherungskassetten zugeordnet und diesen Frontwandbereich und/oder Schrankfrontbereich zumindest teilweise oder vollständig abdeckend angeordnet. Dabei verschließt ein derartiges vorderes Schottelement die Sicherungskassetten gegenüber dem Außenbereich der Schaltanlage druckfest, so dass ein Austreten der Gase nach vorne sicher verhindert ist.

In einer weiteren, alternativen Ausführungsform der Erfindung ist bei einer Anordnung der Druckentlastungseinrichtung im Frontwandbereich des Behälters das oder ein weiteres vorderes Schottelement denjenigen Enden (vorderen Enden) der Sicherungskassetten zugeordnet und diese sowie den Frontwandbereich des Behälters zumindest teilweise abdeckend angeordnet, die in Richtung des Frontwandbereichs des Behälters liegen. Dabei ist oder sind das oder die Schottelement/e im Frontbereich, insbesondere Schrankfrontbereich der Schaltanlage den Frontwandbereich des Behälters und/oder der Sicherungskassetten teilweise oder vollständig abdeckend angeordnet. Somit verschließen derartige vordere Schottelemente die Sicherungskassetten gegenüber dem Außenbereich der Schaltanlage druckfest, so dass ein Austreten der Gase nach vorne sicher verhindert ist.

In einer vorteilhaften Ausführungsform ist das jeweilige Schottelement derart insbesondere druckfest ausgebildet, dass dieses eine Ableitung in Entlastungsrichtung bildet. Hierzu ist das jeweilige Schottelement in einer geeigneten Form ausgeführt. Beispielsweise ist das Schottelement als ein Schottblech, eine Schottplatte und/oder ein Schottprofil ausgebildet. Auch können mehrere Schottelemente vorgesehen sein, die derart angeordnet sind, dass sie einen Kanal bilden, durch welchen austretende Gase sicher nach unten abgeleitet werden.

Zusätzlich kann der Kanal mit mindestens einem zugehörigen Steuerelement, insbesondere einer Ventilklappe, versehen sein. Dabei wird der Kanal mittels des Steuerelements derart verschlossen, dass ein Eindringen von solchen Gasen verhindert wird, die beispielsweise durch einen Lichtbogen in einem benachbarten Anlagenteil entstehen. Hierdurch ist sichergestellt, dass von benachbarten Anlagenteilen austretende Gase nicht in den Bereich der Sicherungskassetten und somit in den Sicherungsraum eintreten und diesen, insbesondere die Sicherungselemente, nicht nachhaltig schädigen.

Eine einfache Ausführungsform sieht vor, dass das Schottelement aus Metall, insbesondere aus Stahlblech, ist. Alternativ kann das Schottelement aus Kunststoff, insbesondere aus Duroplast oder Thermoplast oder einem anderen geeigneten, insbesondere faserverstärkten Kunststoff, gebildet sein.

Darüber hinaus kann das Schottelement als ein mehrteiliges Element ausgebildet sein, das beispielsweise die Sicherungskassetten zumindest teilweise oder vollständig umgibt und/oder das einen Kanal zur Abführung von aus dem Behälter austretenden Gasen bildet.

Ferner können die Sicherungskassetten zumindest mit einem Aufnahmeelement, insbesondere einer Nut, versehen sein, in welche das Schottelement angeordnet ist. Hierdurch ist eine einfache und frei zugängliche Montage oder Demontage des Schottelements ermöglicht.

Zusätzlich kann im Bereich der Entlastungsrichtung, insbesondere vor der Druckentlastungseinrichtung, mindestens ein Leitelement angeordnet sein. Dabei ist das Leitelement derart ausgebildet, dass dieses eine Ab- und/oder Umleitung in Entlastungsrichtung für austretende Gase bildet. Hierdurch wird sichergestellt, dass austretende Gase nach unten und/oder nach hinten und unten abgeleitet werden, so dass beim Bedienen der Schaltanlage keine Gase nach vorne austreten können.

Zweckmäßigerweise ist das Leitelement als ein Profil ausgebildet. Beispielsweise kann das Leitelement als ein U-Profil, ein L-Profil oder ein Hohlkanal-Profil ausgebildet sein. Auch können mehrere Leitelemente vorgesehen sein, die derart angeordnet sind, dass sie einen Leitkanal bilden. Zum Verschließen oder Öffnen des Leitkanals bei einer Störung eines benachbarten Anlagenteils bzw. bei einer Störung des zugehörigen Anlagenteils, insbesondere des zugehörigen Schaltgeräts, ist der Leitkanal mit mindestens einem zugehörigen Steuerelement, insbesondere einer verstellbaren Ventilklappe, versehen.

Eine einfache Ausführungsform sieht vor, dass das Leitelement aus Metall, insbesondere aus Stahlblech, ist. Alternativ kann das Leitelement aus Kunststoff, insbesondere aus Duroplast oder Thermoplast oder einem anderen geeigneten, insbesondere faserverstärkten Kunststoff, gebildet sein.

Ausführungsbeispiele der Erfindung werden anhand von Zeichnungen näher erläutert. Dabei zeigen:
- FIG 1: schematisch in Vorderansicht eine modular aufgebaute Schaltanlage mit einem Schaltschrank, umfassend ein Schaltfeld für mindestens ein Schaltgerät, einen darunter angeordneten Sicherungsraum und einen Kabelanschlussraum gemäß dem Stand der Technik,
- FIG 2: schematisch in Vorderansicht einen Schaltschrank mit geöffneter Klappe für den Sicherungsraum und zwei erfindungsgemäßen vorderen Schottelementen,
- FIG 3: schematisch im Längsschnitt einen Schaltschrank mit einem erfindungsgemäßen hinteren Schottelement im Sicherungsraum,
- FIG 4: schematisch in Vorderansicht einen Schaltschrank mit geöffneter Klappe für den Sicherungsraum und einem erfindungsgemäßen seitlichen Schottelement,
- FIG 5: schematisch im Längsschnitt einen Schaltschrank mit einem erfindungsgemäßen vorderen Schottelement im Sicherungsraum,
- FIG 6: schematisch im Längsschnitt einen Schaltschrank mit einem erfindungsgemäßen vorderen Schottelement und einem Leitkanal im Sicherungsraum,
- FIG 7: schematisch einen vergrößerten Bereich des Schaltschranks in Vorderansicht mit zwei im Sicherungsraum angeordneten vorderen Schottelementen im demontierten Zustand,
- FIG 8: schematisch den Bereich gemäß Figur 7 im Längsschnitt, und
- FIG 9: schematisch den Bereich gemäß Figur 7 im Längsschnitt mit an den Sicherungskassetten montierten Schottelementen.

Einander entsprechende Teile sind in allen Figuren mit den gleichen Bezugszeichen versehen.

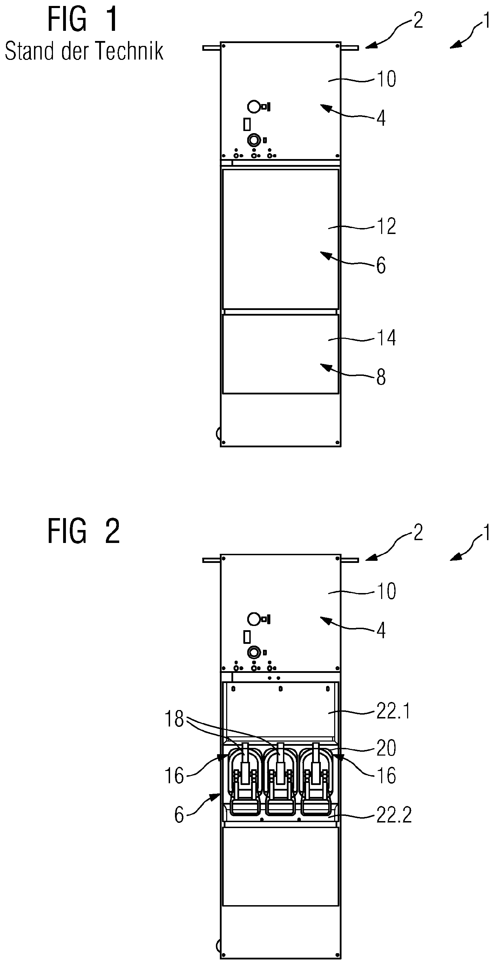

Figur 1 zeigt in Vorderansicht eine modular aufgebaute Schaltanlage 1 mit einem Schaltschrank 2, umfassend ein Schaltfeld 4 für mindestens ein Schaltgerät, einen darunter angeordneten Sicherungsraum 6 und einen Kabelanschlussraum 8 gemäß dem Stand der Technik.

Bei der Schaltanlage 1 handelt es sich insbesondere um eine metallgekapselte, gasisolierte Mittelspannungs-Schaltanlage, wobei eine anlagenorientierte Anzahl von nicht näher dargestellten Schaltgeräten, wie z. B. Lasttrennschalter, im Schaltfeld 4 in einem metallgekapselten, gasisolierten Behälter 10 angeordnet sind.

Der Sicherungsraum 6 ist mittels einer lösbaren Sicherungsklappe 12 zugänglich, so dass in einem Störungsfall durch Öffnen der Sicherungsklappe 12 der Sicherungsraum 6 und gegebenenfalls der angrenzende Bereich zugänglich sind.

Der Kabelanschlussraum 8 ist mit einer Kabelanschlussblende 14 versehen.

Figur 2 zeigt schematisch in Vorderansicht einen Schaltschrank 2 mit geöffneter Sicherungsklappe 12 für den Sicherungsraum 6.

Im Ausführungsbeispiel nach Figur 2 umfasst die Schaltanlage 1 drei Sicherungselemente 16, die in einem Stör- oder Fehlerfall, z. B. im Kurzschlussfall oder Überlastfall, mittels eines Sicherungsauslösemechanismus 18 mindestens ein oder mehrere der Schaltgeräte schalten, so dass ein über das Schaltgerät an einem Netz angeschlossener Verbraucher getrennt wird. Dabei kann die Schaltanlage 1 je Schaltgerät ein oder mehrere Sicherungselemente 16 umfassen. Die Sicherungselemente 16 sind jeweils in einer zugehörigen Sicherungskassette 20 (auch Sicherungskammer genannt) angeordnet.

Um im Fall beispielsweise eines Störlichtbogens im Behälter 10 einen Druckabbau durch gezielt gerichtetes Austreten von Gasen zu ermöglichen und die austretenden Gase gezielt weiter- oder umzuleiten, ist im Schaltschrank 2 den Sicherungskassetten 20 zumindest an einer der Entlastungsrichtung des Gases zugewandten Seite eine Anzahl von Schottelementen 22.1 bis 22.n zugeordnet.

Im Ausführungsbeispiel nach Figur 2 sind zwei vordere Schottelemente 22.1, 22.2 vorgesehen, die als separate flache Schottplatten oder -wände oberhalb und unterhalb des Sicherungsraums 6 diesen nach vorne hin abdeckend angeordnet sind, so dass bei einem Gasaustritt aus dem Behälter 10 nach unten durch die vorderen Schottelemente 22.1, 22.2 ein Gasaustritt nach vorne vermieden ist, indem das Gas nach unten ableitbar ist. Die vorderen Schottelemente 22.1, 22.2 können dabei unabhängig von der Position einer am Behälter 10 angeordneten Druckentlastungseinrichtung 24, deren verschiedene Positionen anhand der nachfolgenden Figuren näher beschrieben werden, im Schaltschrank 2 vorgesehen sein.

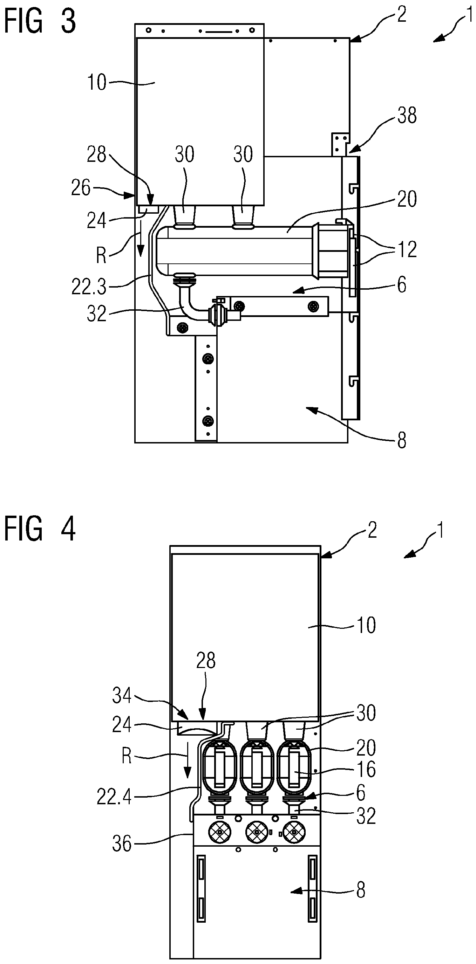

Figur 3 zeigt ein weiteres Ausführungsbeispiel für die Erfindung, bei welcher eine Druckentlastungseinrichtung 24 im Rückwandbereich 26, insbesondere in einem hinteren Bodenbereich 28 des Behälters 10, angeordnet ist.

Bei der Druckentlastungseinrichtung 24 handelt es sich um eine herkömmliche Einrichtung, z. B. eine so genannte Brechplatte oder eine Berstscheibe mit einer definierten Sollbruchstelle, die beispielsweise oberhalb eines im Normalbetrieb auftretenden maximalen Gasdrucks im Behälter 10 unterhalb eines Berstdrucks für den Behälter 10 eingestellt ist. Die Druckentlastungseinrichtung 24 ist dabei derart ausgeführt, dass diese eine vorgegebene Entlastungsrichtung R aufweist, in welche bei Bersten der Druckentlastungseinrichtung 24 das austretende Gas austritt.

Für eine gezielte Ableitung von im Störfall austretendem Gas ist im Sicherungsraum 6 den Sicherungskassetten 20 ein hinteres Schottelement 22.3 zugeordnet. Dabei weist das Schottelement 22.3 eine Profilform auf, die mit der hinteren Außenform der oder den Sicherungskassetten 20 korrespondiert, so dass die Sicherungskassette/n 20 weitgehend vollständig vom hinteren Schottelement 22.3 abgedeckt ist bzw. sind, so dass aus dem Behälter 10 austretendes Gas nicht nach vorne in den Sicherungsraum 6 eintreten kann.

Das hintere Schottelement 22.3 ist insbesondere als eine gebogene Platte, insbesondere ein gebogenes Stahlblech, oder als eine entsprechend geformte Kunststoffplatte, beispielsweise aus Thermoplast oder Duroplast, ausgebildet.

Das oder die im Behälter 10 angeordnete/n Schaltgerät/e ist bzw. sind über vom Behälter 10 abgehende Durchführungseinrichtungen 30 und die Sicherungselemente 16 sowie einem Kabelanschluss 32 beispielsweise mit einem nicht näher dargestellten Sammelschienenanschluss im Kabelanschlussraum 8 verbindbar. Dabei sind sowohl die Durchführungseinrichtungen 30 als auch der Kabelanschluss 32 entsprechend in herkömmlicher Art und Weise isoliert ausgeführt.

Figur 4 zeigt schematisch in Vorderansicht einen Schaltschrank 1 mit geöffneter Sicherungsklappe 12 für den Sicherungsraum 6 und mit einem seitlichen Schottelement 22.4 für den Sicherungsraum 6. In diesem Ausführungsbeispiel ist die Druckentlastungseinrichtung 24 seitlich des Sicherungsraums 6 angeordnet. Beispielsweise ist die Druckentlastungseinrichtung 24 in einem Frontwandbereich 34 des Behälters 10 im nach vorne gerichteten Bodenbereich 28 angeordnet. Zur seitlichen Abschottung des Sicherungsraums 6 ist das seitliche Schottelement 22.4 derjenigen Seite der Sicherungskassetten 20 zugeordnet, die der Entlastungsrichtung R zugewandt ist. Dabei deckt das seitliche Schottelement 22.4 die Sicherungskassetten 20 seitlich vollständig ab, so dass die austretenden Gase nach unten abgeleitet werden und keine in Entlastungsrichtung R austretenden Gase in den Sicherheitsraum 6 gelangen. Dabei ist das seitliche Schottelement 22.4 als eine entsprechend geformte oder gebogene Platte, insbesondere eine Stahlplatte oder Kunststoffplatte, ausgeführt.

Zweckmäßigerweise sind die in Richtung des Behälters 10 gerichteten Enden des seitlichen Schottelements 22.4 derart abgewinkelt, dass diese parallel zum Bodenbereich 28 des Behälters 10 verlaufen und an diesem kraft-, form- und/oder stoffschlüssig befestigt sind. Die gegenüberliegenden Enden des seitlichen Schottelements 22.4 sind beispielsweise form-, kraft- und/oder stoffschlüssig an einer Seitenwand 36 des Kabelanschlussraums 8 befestigt. Auch kann das seitliche Schottelement 22.4 in einer anderen geeigneten Art und Weise an einer anderen geeigneten Stelle im Schaltschrank 2 befestigt sein.

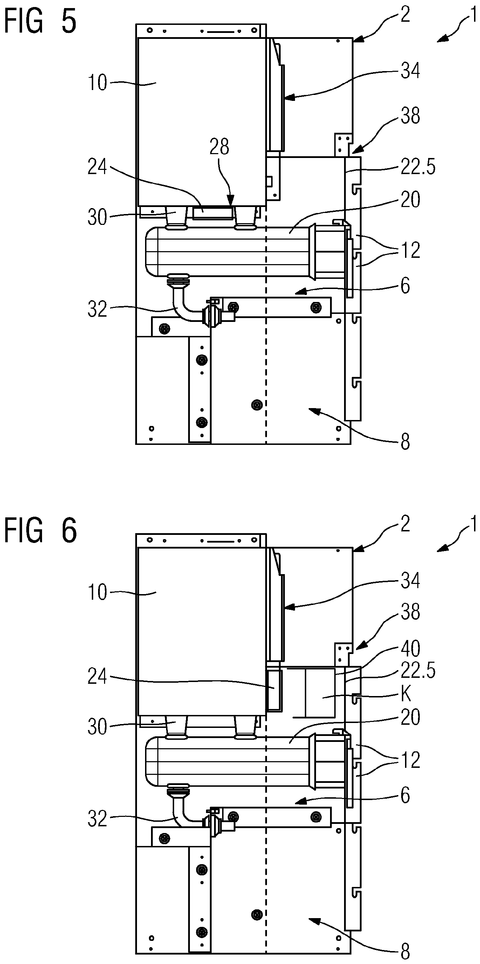

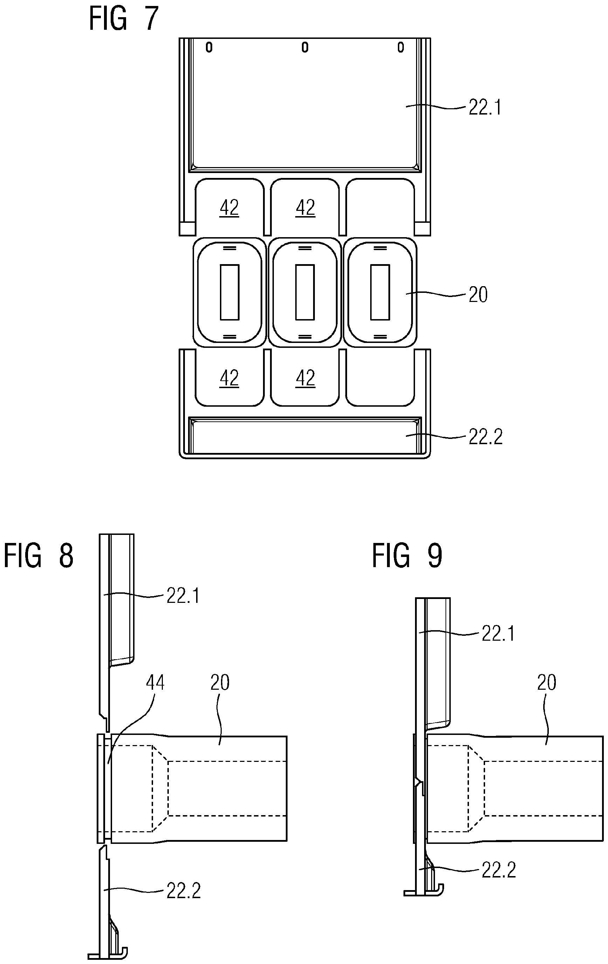

Figur 5 zeigt im Längsschnitt einen Schaltschrank 2 mit einem weiteren vorderen Schottelement 22.5 im Sicherungsraum 6. In diesem Ausführungsbeispiel ist die Druckentlastungseinrichtung 24 im Bodenbereich 28 des Behälters 10 an einer vorgebbaren Position angeordnet. Um ein Austreten von Gasen beim Öffnen der Sicherungsklappe 12 zu verhindern, ist das vordere Schottelement 22.5 derart im Schrankfrontbereich 38 des Schaltschranks 2 angeordnet, dass das vordere Schottelement 22.5 sowohl den Frontwandbereich 34 des Behälters 10 als auch den vorderen Bereich des Sicherungsraums 6 abdeckt, so dass austretende Gase sicher nach unten abgeleitet werden. Dabei kann das vordere Schottelement 22.5 in mehrere Elemente unterteilt sein, wie in Figuren 7 bis 9 dargestellt.

Das vordere Schottelement 22.5 ist plattenförmig ausgeführt und möglichst flach sowie druckfest. Beispielsweise ist das vordere Schottelement 22.5 eine Stahl- oder Kunststoffplatte. Dabei kann das vordere Schottelement 22.5 an der Sicherungsklappe 12 oder einer anderen geeigneten Stelle form-, kraft- und/oder stoffschlüssig befestigt sein.

Figur 6 zeigt im Längsschnitt einen Schaltschrank 2 mit einem erfindungsgemäßen vorderen Schottelement 22.5. Zum sicheren Ableiten von austretenden Gasen nach unten kann im Sicherungsraum 6 vor dem vorderen Schottelement 22.5 zusätzlich ein Leitelement 40 angeordnet sein. In diesem Ausführungsbeispiel ist eine Druckentlastungseinrichtung 24 im Frontwandbereich 34 des Behälters 10 angeordnet.

Dabei ist das Leitelement 40 kanalförmig ausgebildet, um eine Um- und Ableitung der austretenden Gase zu erzielen. Hierzu kann das Leitelement 40 als ein Profil, z. B. ein U-Profil, ein L-Profil, ein Hohlzylinder, ein Rohr und/oder ein anderes geeignetes Profil ausgebildet sein. Auch kann das Leitelement 40 aus verschiedenen Profilen zusammengesetzt sein. Um zusätzliche Bauelemente zu vermeiden, kann anstelle des zusätzlichen Leitelements 40 das vordere Schottelement 22.5 in nicht näher dargestellter Art und Weise kanalförmig ausgebildet sein. Hierzu ist das Schottelement 22.5 insbesondere ein Schottprofil, z. B. ein U-förmiges oder L-förmiges Schottprofil.

Darüber hinaus ist der mittels eines oder mehrerer Leitelemente 40 oder eines oder mehrerer Schottelemente 22.5 gebildete Kanal K ausgangsseitig mit mindestens einem Steuerelement, z. B. einer Ventilklappe oder Rückschlagklappe, versehen, so dass ein Eindringen von Gasen benachbarter Schaltfelder (nicht näher gezeigt) in den Sicherungsraum 6 sicher vermieden ist.

Figur 7 zeigt schematisch einen vergrößerten Bereich des Schaltschranks 2 in Vorderansicht mit zwei im Sicherungsraum 6 angeordneten vorderen Schottelementen 22.1, 22.2 im demontierten Zustand. Die plattenförmigen vorderen Schottelemente 22.1, 22.2 können dabei endseitig auf die Sicherungskassetten 20 form-, kraft- und/oder stoffschlüssig aufgesetzt werden. Hierzu weisen die Schottelemente 22.1, 22.2 jeweils eine der Anzahl der Sicherungskassetten 20 entsprechende Anzahl von korrespondierenden Aussparungen 42 auf.

Hierzu ist, wie in Figur 8 gezeigt, die jeweilige Sicherungskassette 20 mit einer Nut 44 versehen, in welche die Schottelemente 22.1, 22.2 formschlüssig einführbar und fixierbar sind. Figur 9 zeigt die an den Sicherungskassetten 20 montierten Schottelemente 22.1, 22.2. Dabei decken die Schottelemente 22.1, 22.2 den Schrankfrontbereich 38 ab, so dass die Gase nach unten abgeleitet werden.

## Patentansprüche

1. Schaltanlage (1), insbesondere Mittelspannungs-Schaltanlage mit einer Anzahl von Schaltgeräten, Kabelanschlüssen (32) und/oder Sammelschienen, die in einem Schaltschrank (2) angeordnet sind, wobei in dem Schaltschrank (2) das oder die Schaltgeräte in einem metallgekapselten, mit Isoliergas gefüllten Behälter (10) oberhalb einer Anzahl von Sicherungskassetten (20) mit Sicherungselementen (16) angeordnet ist bzw. sind,
**dadurch gekennzeichnet, dass** der Behälter (10) mit mindestens einer Druckentlastungseinrichtung (24) mit einer vorgegebenen Entlastungsrichtung (R) versehen ist, wobei den Sicherungskassetten (20) zumindest an einer der Entlastungsrichtung (R) zugewandten Seite zumindest ein Schottelement (22.1 bis 22.n) zugeordnet ist, wobei
durch das im Bereich der Sicherungskassette (20) in Entlastungsrichtung (R) der Druckentlastungseinrichtung (24) angeordnete Schottelement (22.1 bis 22.n) ein Austreten von heißen Gasen in einen Sicherungsraum verhindert wird, indem eine gezielte Ableitung der Gase in einen Ableitkanal gegeben ist.

2. Schaltanlage nach Anspruch 1,
**dadurch gekennzeichnet, dass** bei einer Anordnung der Druckentlastungseinrichtung (24) im Rückwandbereich (26) des Behälters (10) ein hinteres Schottelement (22.3) denjenigen Enden der Sicherungskassetten (20) zugeordnet und diese zumindest teilweise abdeckend angeordnet ist, die in Richtung des Rückwandbereichs (26) des Behälters (10) liegen.

3. Schaltanlage nach Anspruch 1 oder 2,
**dadurch gekennzeichnet, dass** bei einer Anordnung der Druckentlastungseinrichtung (24) zumindest in einem Seitenwandbereich des Behälters (10) ein seitliches Schottelement (22.4) derjenigen Seite der Sicherungskassetten (20) zugeordnet und diese zumindest teilweise abdeckend angeordnet ist, die der Entlastungsrichtung (R) zugewandt ist.

4. Schaltanlage nach einem der vorhergehenden Ansprüche,
**dadurch gekennzeichnet, dass** bei einer Anordnung der Druckentlastungseinrichtung (24) zumindest in einem Bodenbereich (28) des Behälters (10) ein vorderes Schottelement (22.5) einem Schrankfrontbereich (38) des Schaltschranks (2) und den Sicherungskassetten (20) zugeordnet und diesen Schrankfrontbereich (38) zumindest teilweise abdeckend angeordnet ist.

5. Schaltanlage nach einem der vorhergehenden Ansprüche,
**dadurch gekennzeichnet, dass** bei einer Anordnung der Druckentlastungseinrichtung (24) im Frontwandbereich (34) des Behälters (10) zumindest ein vorderes Schottelement (22.5) und/oder ein Leitelement (40) denjenigen Enden der Sicherungskassetten (20) zugeordnet und diese sowie den Frontwandbereich (34) des Behälters (10) zumindest teilweise abdeckend angeordnet ist, die in Richtung des Frontwandbereichs (34) des Behälters (10) liegen.

6. Schaltanlage nach einem der vorhergehenden Ansprüche,
**dadurch gekennzeichnet, dass** im Schrankfrontbereich (38) des Schaltschranks (2) zumindest ein vorderes Schottelement (22.1, 22.2) angeordnet ist.

7. Schaltanlage nach einem der vorhergehenden Ansprüche,
**dadurch gekennzeichnet, dass** das jeweilige Schottelement (22.1 bis 22.n) derart ausgebildet ist, dass dieses eine Ableitung in Entlastungsrichtung (R) bildet.

8. Schaltanlage nach einem der vorhergehenden Ansprüche,
**dadurch gekennzeichnet, dass** das jeweilige Schottelement (22.1 bis 22.n) als ein Schottblech, eine Schottplatte und/oder ein Schottprofil ausgebildet ist.

9. Schaltanlage nach einem der vorhergehenden Ansprüche,
**dadurch gekennzeichnet, dass** mehrere Schottelemente (22.1 bis 22.n) vorgesehen sind, die derart angeordnet sind, dass sie einen Kanal (K) bilden.

10. Schaltanlage nach Anspruch 9,
**dadurch gekennzeichnet, dass** der Kanal (K) mit mindestens einem zugehörigen Steuerelement, insbesondere einer Ventilklappe oder einer Rückschlagklappe, versehen ist.

11. Schaltanlage nach einem der vorhergehenden Ansprüche,
**dadurch gekennzeichnet, dass** das Schottelement (22.1 bis 22.n) aus Metall, insbesondere aus Stahlblech, ist.

12. Schaltanlage nach einem der vorhergehenden Ansprüche,
**dadurch gekennzeichnet, dass** das Schottelement (22.1 bis 22.n) aus Kunststoff, insbesondere aus Duroplast oder Thermoplast oder einem anderen geeigneten, insbesondere faserverstärkten Kunststoff, ist.

13. Schaltanlage nach einem der vorhergehenden Ansprüche,
**dadurch gekennzeichnet, dass** das Schottelement (22.1 bis 22.n) als ein mehrteiliges Element ausgebildet ist, das die Sicherungskassetten (20) zumindest teilweise oder vollständig umgibt.

14. Schaltanlage nach einem der vorhergehenden Ansprüche,
**dadurch gekennzeichnet, dass** die Sicherungskassetten (20) zumindest mit einem Aufnahmeelement, insbesondere einer Nut (44), versehen sind, in welche das Schottelement (22.1, 22.2) anordbar ist.

15. Schaltanlage nach einem der vorhergehenden Ansprüche,
**dadurch gekennzeichnet, dass** im Bereich der Entlastungsrichtung (R) des Gases, insbesondere ausgangsseitig der Druckentlastungseinrichtung (24), mindestens ein Leitelement (40) angeordnet ist.

16. Schaltanlage nach Anspruch 15,
**dadurch gekennzeichnet, dass** das Leitelement (40) derart ausgebildet ist, dass dieses eine Ab- und/oder Umleitung in Entlastungsrichtung (R) bildet.

17. Schaltanlage nach Anspruch 15 oder 16,
**dadurch gekennzeichnet, dass** das Leitelement (40) als ein Profil ausgebildet ist.

18. Schaltanlage nach einem der Ansprüche 15 bis 17, **dadurch gekennzeichnet, dass** mehrere Leitelemente (40) vorgesehen sind, die derart angeordnet sind, dass sie einen Leitkanal (K) bilden.

19. Schaltanlage nach Anspruch 18,
**dadurch gekennzeichnet, dass** der Leitkanal (K) mit mindestens einem zugehörigen Steuerelement, insbesondere einer Ventilklappe oder einer Rückschlagklappe, versehen ist.

## Claims

1. Switchgear system (1), especially medium-voltage switchgear system, comprising a plurality of switching devices, cable connections (32) and/or busbars which are arranged in a switchgear cabinet (2), the one or more switching devices being arranged in a metal-encapsulated container (10) which is filled with insulating gas above a plurality of fuse cassettes (20) containing fuse elements (16) in the switchgear cabinet (2), **characterized in that** the container (10) is provided with at least one pressure relief device (24) having a predetermined direction of relief (R), at least one bulkhead element (22.1 to 22.n) being associated with the fuse cassettes (20) on at least one side facing the direction of relief (R), the bulkhead element (22.1 to 22.n) arranged in the area of the fuse cassette (20) in the direction of relief (R) of the pressure relief device (24) preventing an escape of hot gases into a fuse compartment by specifically diverting the gases into a discharge channel.

2. Switchgear system according to Claim 1, **characterized in that** with an arrangement of the pressure relief device (24) in the area of the rear wall (26) of the container (10), a rear bulkhead element (22.3) is associated with those ends of the fuse cassettes (20) which lie in the direction of the area of the rear wall (26) of the container (10), and is arranged to cover these at least partially.

3. Switchgear system according to Claim 1 or 2, **characterized in that** when the pressure relief device (24) is arranged at least in a side wall area of the container (10), a lateral bulkhead element (22.4) is associated with that side of the fuse cassettes (20) which faces the direction of relief (R) and is arranged to provide at least partial covering.

4. Switchgear system according to one of the preceding claims, **characterized in that** when the pressure relief device (24) is arranged at least in a floor area (28) of the container (10), a front bulkhead element (22.5) is associated with a cabinet front area (38) of the switchgear cabinet (2) and the fuse cassettes (20) and is arranged to provide at least partial covering of this cabinet front area (38).

5. Switchgear system according to one of the preceding claims, **characterized in that** when the pressure relief device (24) is arranged in the front wall area (34) of the container (10), at least one front bulkhead element (22.5) and/or one guide element (40) is associated with those ends of the fuse cassettes (20) which lie in the direction of the front wall area (34) of the container (10) and is arranged to provide at least partial covering for these and the front wall area (34) of the container (10).

6. Switchgear system according to one of the preceding claims, **characterized in that** at least one front bulkhead element (22.1, 22.2) is arranged in the cabinet front area (38) of the switchgear cabinet (2).

7. Switchgear system according to one of the preceding claims, **characterized in that** the specific bulkhead element (22.1 to 22.n) is designed in such a way that it forms a discharge in the direction of relief (R).

8. Switchgear system according to one of the preceding claims, **characterized in that** the specific bulkhead element (22.1 to 22.n) is designed in the form of a bulkhead sheet, a bulkhead plate and/or a bulkhead section.

9. Switchgear system according to one of the preceding claims, **characterized in that** a plurality of bulkhead elements (22.1 to 22.n) are provided which are arranged in such a way that they form a channel (K)

10. Switchgear system according to Claim 9, **characterized in that** the channel (K) is provided with at least one associated control element, in particular a valve flap or a non-return flap.

11. Switchgear system according to one of the preceding claims, **characterized in that** the bulkhead element (22.1 to 22.n) is made of metal, in particular sheet steel.

12. Switchgear system according to one of the preceding claims, **characterized in that** the bulkhead element (22.1 to 22.n) is made of plastic, in particular Duroplast or Thermoplast, or another suitable, in particular fiber-reinforced, plastic.

13. Switchgear system according to one of the preceding claims, **characterized in that** the bulkhead element (22.1 to 22.n) is designed in the form of a multi-part element which at least partially or completely encloses the fuse cassettes (20).

14. Switchgear system according to one of the preceding claims, **characterized in that** the fuse cassettes (20) are provided with at least one receiving element, in particular a slot (44), in which the bulkhead element (22.1, 22.2) can be arranged.

15. Switchgear system according to one of the preceding claims, **characterized in that** at least one guide element (40) is arranged in the area of the direction of relief (R) of the gas, in particular on the output side of the pressure relief device (24).

16. Switchgear system according to Claim 15, **characterized in that** the guide element (40) is designed in such a way that it forms a discharge and/or diversion in the direction of relief (R).

17. Switchgear system according to Claim 15 or 16, **characterized in that** the guide element (40) is designed as a section.

18. Switchgear system according to one of Claims 15 to 17, **characterized in that** a plurality of guide elements (40) are provided which are arranged in such a way that they form a guide channel (K).

19. Switchgear system according to Claim 18, **characterized in that** the guide channel (K) is provided with at least one associated control element, in particular a valve flap or a non-return flap.

## Revendications

1. Installation ( 1 ) de distribution, notamment installation de distribution de moyenne tension, ayant un certain nombre d'appareils de coupure, de bornes ( 32 ) de câble et/ou de barres collectrices, qui sont disposés dans une armoire ( 2 ) de distribution, le ou les appareils de coupure dans l'armoire ( 2 ) de distribution est ou sont disposés dans un récipient ( 10 ) à blindage métallique et empli d'un gaz isolant au dessus d'un certain nombre de cassettes ( 20 ) de sécurisation ayant des éléments ( 16 ) de sécurisation,
**caractérisée en ce que**
le récipient ( 10 ) est pourvu d'au moins un dispositif ( 24 ) de détente de la pression, ayant une direction ( R ) de détente donnée à l'avance, au moins un élément ( 22.1 à 22.n ) de cloisonnement étant associé aux cassettes ( 20 ) de sécurisation, au moins d'un côté tourné vers la direction ( R ) de détente, dans laquelle,
par l'élément ( 22.1 à 22.n ) de cloisonnement disposé dans la région des cassettes ( 20 ) de sécurisation, dans la direction ( R ) de détente du dispositif ( 24 ) de détente de la pression, une sortie de gaz chaud dans un espace de sécurisation est empêchée, en ayant une évacuation ciblée des gaz dans un conduit d'évacuation.

2. Installation de distribution suivant la revendication 1, **caractérisée en ce que**
lorsque le dispositif ( 24 ) de détente de la pression est disposé dans la région ( 26 ) de paroi arrière du récipient ( 10 ), un élément ( 22.3 ) de cloisonnement arrière est associé aux extrémités des cassettes ( 20 ) de sécurisation et est disposé, en les recouvrant au moins en partie, extrémités qui se trouvent dans la direction de la région ( 26 ) de paroi arrière du récipient ( 10 ).

3. Installation de distribution suivant la revendication 1 ou 2,
**caractérisée en ce que**,
lorsque le dispositif ( 24 ) de détente de la pression est disposé au moins dans une région de paroi latérale du récipient ( 10 ), un élément ( 22.4 ) de cloisonnement latéral est associé au côté des cassettes ( 20 ) de sécurisation et est disposé, en les recouvrant au moins en partie, côté qui est tourné vers la direction ( R ) de détente.

4. Installation de distribution suivant l'une des revendications précédentes,
**caractérisée en ce que**,
lorsque le dispositif ( 24 ) de détente de la pression est disposé au moins dans une région ( 28 ) de fond du récipient ( 10 ), un élément ( 22.5 ) de cloisonnement avant est associé à une région ( 38 ) avant de l'armoire ( 2 ) de distribution et aux cassettes ( 20 ) de sécurisation et est monté en recouvrant au moins partiellement cette région ( 38 ) avant de l'armoire.

5. Installation de distribution suivant l'une des revendications précédentes,
**caractérisée en ce que**,
lorsque le dispositif ( 24 ) de détente de la pression est disposé dans la région ( 34 ) de paroi avant du récipient ( 10 ), au moins un élément ( 22.5 ) de cloisonnement avant et/ou un élément ( 40 ) de conduite est associé aux extrémités des cassettes ( 20 ) de sécurisation et est disposé, en les recouvrant au moins en partie, ainsi que la région ( 34 ) de paroi avant du récipient ( 10 ), extrémités qui se trouvent dans la direction de la région ( 34 ) de paroi avant du récipient ( 10 ).

6. Installation de distribution suivant l'une des revendications précédentes,
**caractérisée en ce qu'**
au moins un élément ( 22.1, 22.2 ) de cloisonnement avant est disposé dans la région ( 38 ) avant de l'armoire ( 2 ) de distribution.

7. Installation de distribution suivant l'une des revendications précédentes,
**caractérisée en ce que**
l'élément ( 22.1 à 22.n ) de cloisonnement est constitué de manière à former un conduit d'évacuation dans la direction ( R ) de détente.

8. Installation de distribution suivant l'une des revendications précédentes,
**caractérisée en ce que**
l'élément ( 22.1 à 22.n ) de cloisonnement est constitué sous la forme d'une tôle de cloisonnement, d'une plaque de cloisonnement et/ou d'un profilé de cloisonnement.

9. Installation de distribution suivant l'une des revendications précédentes,
**caractérisée en ce qu'**
il est prévu plusieurs éléments ( 22.1 à 22.n ) de cloisonnement disposés de manière à former un conduit ( K ).

10. Installation de distribution suivant la revendication 9,
**caractérisée en ce que**
le conduit ( K ) est pourvu d'au moins un élément de commande associé, notamment d'un clapet de soupape ou d'un clapet anti-retour.

11. Installation de distribution suivant l'une des revendications précédentes,
**caractérisée en ce que**
l'élément ( 22.1 à 22.n ) de cloisonnement est en métal, notamment en tôle d'acier.

12. Installation de distribution suivant l'une des revendications précédentes,
**caractérisée en ce que**
l'élément ( 22.1 à 22.n ) de cloisonnement est en matière plastique, notamment en matière plastique thermodurcissable ou en matière thermoplastique ou en une autre matière plastique appropriée, notamment renforcée par de la fibre.

13. Installation de distribution suivant l'une des revendications précédentes,
**caractérisée en ce que**
l'élément ( 22.1 à 22.n ) de cloisonnement est constitué sous la forme d'un élément en plusieurs parties, qui entoure, en tout ou au moins en partie, les cassettes ( 20 ) de sécurisation.

14. Installation de distribution suivant l'une des revendications précédentes,
**caractérisée en ce que**
les cassettes ( 20 ) de sécurisation sont pourvues au moins d'un élément de réception, notamment d'une rainure ( 44 ), dans laquelle peut être monté l'élément ( 22.1, 22.2 ) de cloisonnement.

15. Installation de distribution suivant l'une des revendications précédentes,
**caractérisée en ce qu'**
au moins un élément ( 40 ) de conduite est disposé dans la région de la direction ( R ) de détente du gaz, notamment du côté de la sortie du dispositif ( 24 ) de détente de la pression.

16. Installation de distribution suivant la revendication 15, **caractérisée en ce que**
l'élément ( 40 ) de conduite est constitué de manière à former un conduit d'évacuation et/ou de contournement dans la direction ( R ) de décharge.

17. Installation de distribution suivant la revendication 15 ou 16,
**caractérisée en ce que**
l'élément ( 40 ) de conduite est constitué sous la forme d'un profilé.

18. Installation de distribution suivant l'une des revendications 15 à 17,
**caractérisée en ce qu'**
il est prévu plusieurs éléments ( 40 ) de conduite disposés de manière à former un conduit ( K ).

19. Installation de distribution suivant la revendication ( 18 ),
**caractérisée en ce que**
le conduit ( K ) est pourvu d'au moins un élément de commande associé, notamment d'un clapet de soupape ou d'un clapet anti-retour.
